# EUROPEAN PATENT APPLICATION

(11) **EP 2 495 291 A1**
(43) Date of publication of application: **05.09.2012**
(21) Application number: 10826892.1
(22) Date of filing: 26.10.2010
(51) Int. Cl.: C09D 17/00, C01G 23/00, C01G 25/00, C09C 3/12

(54) **METHOD FOR PRODUCING ORGANIC SOLVENT DISPERSION OF INORGANIC OXIDE MICROPARTICLES**

(30) Priority: 29.10.2009 JP 2009249166
(71) Applicant: Sakai Chemical Industry Co., Ltd., Sakai-shi, Osaka 590-8502 (JP)
(72) Inventor: NAGAKAWA Keiichi, Sakai-shi Osaka 590-0985 (JP); KAWASAKI Noriaki, Sakai-shi Osaka 590-0985 (JP); MIYATA Atsushi, Sakai-shi Osaka 590-0985 (JP); HIRATA Norimune, Sakai-shi Osaka 590-0985 (JP)
(74) Representative: Duckworth, Timothy John
(86) International application number: PCT/JP2010/069392
(87) International publication number: WO 2011/052762

(57) **Abstract**

The invention provides a method for producing a dispersion of microparticles of an inorganic oxide in an organic solvent having excellent transparency which comprises mixing an alcohol dispersion of microparticles of inorganic oxide selected from zirconia and titania with a silane coupling agent in the presence of an acid and stirring the resulting mixture to surface-treat the microparticles of the inorganic oxide at a temperature within a range from -20 to 60°C; and then replacing the alcohol by a lipophilic organic solvent.

## Description

### Technical Field

The present invention relates to a method for producing a dispersion of microparticles of an inorganic oxide in an organic solvent, and more particularly to a method for producing a dispersion of microparticles of an inorganic oxide selected from zirconia and titania in an organic solvent which is superior in transparency.

### Background Art

A dispersion of microparticles of an inorganic oxide such as silica, alumina, zinc oxide, tin oxide, zirconia or titania has hitherto been used in various industrial fields, and in particular, for controlling a refractive index in an optical field. Of the inorganic oxides, zirconia and titania have a high refractive index, and hence they are used for enhancing a refractive index of an optical material.

Aqueous dispersions whose dispersion medium is water have hitherto been used as such a dispersion of microparticles, but recently organic dispersions whose dispersion medium is an organic solvent have been strongly required in an optical film because aqueous dispersions are not easy to knead with a resin component.

Thus, it is proposed, for example, that an organic solvent and a zirconia stabilizer such as acetic acid are added to an aqueous dispersion of zirconia microparticles to replace the dispersion medium or water by an organic solvent, thereby obtaining a dispersion of zirconia microparticles in the organic solvent (see Patent Literature 1). However, even when the dispersion medium or water is simply replaced by the organic solvent as described above, the microparticles of zirconia easily agglomerate, and the transparency is not enough.

It is already known that when a dispersion of microparticles of an inorganic oxide in an organic solvent is produced, surface treatment of the microparticles of inorganic oxide with a silane coupling agent is effective so that the microparticles are modified to be lipophilic. In this regard, it is proposed that when microparticles of inorganic oxide are surface-treated with a silane coupling agent, a dispersion of microparticles of inorganic oxide whose dispersion medium is an amphipathic organic solvent having a boiling point of 100°C or more such as 1-butanol is treated with a silane coupling agent under reflux in order to enhance the effect of the surface treatment, thereby the silane coupling agent is hydrolyzed so that it is reacted with hydroxyl groups of the surface of the microparticles of inorganic oxide and chemically bonded to the surface of the microparticles of inorganic oxide (see Patent Literature 2).

However, it is also already known that when the microparticles of inorganic oxide are surface-treated by hydrolyzing the silane coupling agent at such a high temperature, the silane coupling agent is also condensed by dehydration, on the other hand, and is formed into an oligomer or, in some cases, a high molecular weight compound which is insoluble in a solvent and precipitated. When the silane coupling agent is formed into a high molecular weight compound insoluble in the solvent as described above, a harmful influence is given to the transparency of the obtained dispersion.

In particular, as dispersions of zirconia or titania in an organic solvent have a high refractive index and a high transparency, they have recently been widely used in the optical filed making use of such properties as above especially for optical films including antireflective films. However, in the surface treatment of the dispersion of the microparticles of zirconia or titania with a silane coupling agent, when the silane coupling agent becomes insoluble and is precipitated in the solvent, a dispersion having a high transparency cannot be obtained.
Patent Literature 1: JP-A-2007-238422
Patent Literature 2: JP-A-2005-314197

### Disclosure of the Invention

### Technical Problems to be Solved

The invention has been accomplished in order to solve the above-mentioned problems involved in production of a dispersion of microparticles of an inorganic oxide in an organic solvent. Therefore, it is an object of the invention to provide a method for producing a dispersion of microparticles of an inorganic oxide selected from zirconia and titania in an organic solvent having excellent transparency.

### Mean to Solve the Problems

The invention provides a method for producing a dispersion of microparticles of an inorganic oxide in an organic solvent which comprises mixing an alcohol dispersion of microparticles of inorganic oxide selected from zirconia and titania with a silane coupling agent in the presence of an acid and stirring the resulting mixture to surface-treat the microparticles of the inorganic oxide at a temperature within a range from -20 to 60°C; and then replacing the alcohol by a lipophilic organic solvent.

### Effect of the Invention

The invention provides a dispersion of microparticles of an inorganic oxide selected from zirconia and titania in an organic solvent having excellent transparency. In particular, the invention provides a dispersion of microparticles of an inorganic oxide in an organic solvent having excellent transparency with very little or reduced agglomeration of the microparticles of inorganic oxide in the starting dispersion used.

In addition, although it has hitherto been difficult to obtain a dispersion of titania in an organic solvent having excellent transparency, the invention provides a dispersion of titania in an organic solvent having a higher transparency than that of the starting dispersion in cases of optimum production conditions.

### Embodiments of the Invention

The method for producing a dispersion of microparticles of inorganic oxide in an organic solvent according to the invention comprises:
a first step of mixing an alcohol dispersion of microparticles of an inorganic oxide selected from zirconia and titania with a silane coupling agent in the presence of an acid and stirring the resulting mixture to surface-treat the microparticles of the inorganic oxide at a temperature within a range from -20 to 60°C; and
a second step of replacing the alcohol that is the dispersion medium of the microparticles of the inorganic oxide thus surface-treated with the silane coupling agent, by a lipophilic organic solvent.

The alcohol dispersion of the microparticles of zirconia used in the first step is usually produced by hydrolyzing zirconium oxychloride in water with heat or with an alkali, and then replacing the water by an alcohol. However, commercially available products can also be used. Similarly, the alcohol dispersion of the microparticles of titania is usually produced by hydrolyzing a titanium salt such as titanium tetrachloride, and then replacing the water by an alcohol. Commercially available products can also be used.

The alcohol, or the dispersion medium in the alcohol dispersion of the microparticles of zirconia or titania described above is not particularly limited. As the alcohol, there may be mentioned, for example, methanol, ethanol, 1-propanol, isopropanol, 1-butanol, 2-butanol, t-butyl alcohol, heptanol, cyclopentanol, cyclohexanol, octanol, lauryl alcohol, etc., among others. Usually methanol, ethanol or isopropanol is preferred, and methanol is particularly preferred.

The concentration of the microparticles of zirconia or titania in the alcohol dispersion is not also particularly limited, and it is usually within a range from 1 to 40% by weight, preferably 5 to 30% by weight, in order to effectively perform the surface treatment with a silane coupling agent.

The average particle size of the microparticles of zirconia or titania in the alcohol dispersion is preferably within a range from 1 to 50 nm, in order to obtain a dispersion in an organic solvent having excellent transparency.

According to the method of the invention, in the first step, the alcohol dispersion of microparticles of zirconia or titania is mixed with a silane coupling agent in the presence of an acid and the resulting mixture is stirred to surface-treat the microparticles of the inorganic oxide at a temperature within a range from -20 to 60°C.

Preferably after an acid is added to the alcohol dispersion of zirconia or titania and the resulting mixture is stirred at a temperature within a range from -20 to 60°C for a suitable time, for example, from 0.5 to 5 hours, a silane coupling agent is added to the mixture, and the resulting mixture is stirred at a temperature within a range from -20 to 60°C for a suitable time, for example, from 3 to 24 hours, thereby to surface-treat the microparticles of zirconia or titania in the dispersion.

The temperature at which an acid is added to the alcohol dispersion of the microparticles of zirconia or titania and during which the resulting mixture is stirred is not necessarily the same as the temperature during which the resulting mixture is surface-treated with a silane coupling agent, but it is necessary to perform both the treatments at temperature within a range from -20 to 60°C.

According to the invention, in the first step, in order to maintain the dispersibility of the microparticles of the inorganic oxide in the starting dispersion, i.e., the alcohol dispersion of the microparticles of inorganic oxide, the microparticles of inorganic oxide in the starting dispersion are treated with a silane coupling agent in the presence of an acid.

The acid used is preferably organic acids. As examples of such organic acids, there may be mentioned, aliphatic carboxylic acids such as acetic acid, formic acid, butyric acid, caproic acid, caprylic acid, linoleic acid, and oleic acid; oxycarboxylic acids such as lactic acid, citric acid, tartaric acid, malic acid, and ricinoleic acid; and aromatic oxycarboxylic acids such as salicylic acid. The organic acid is used usually in an amount of 10 to 200 parts by weight based on 100 parts by weight of zirconia or titania in the alcohol dispersion of the microparticles, preferably 10% by weight or more based on the weight of zirconia or titania in the alcohol dispersion and 150 parts by weight or less based on 100 parts by weight of zirconia or titania in the alcohol dispersion.

However, according to the invention, an inorganic acid may also be used as an acid in the presence of which the starting dispersion is treated with a silane coupling agent. Examples of the inorganic acid may include sulfuric acid, nitric acid, phosphoric acid, and the like. The inorganic acid is used usually in an amount of 0.01 to 1% by weight of zirconia or titania in the alcohol dispersion.

The silane coupling agent used in the invention is an organic silicon compound represented by the general formula (I):

Rₙ-Si-X₄₋ₙ

wherein R is a group having a non-reactive group or a reactive functional group; X is a hydrolyzable group or hydroxyl group; and n is 1, 2 or 3.

The non-reactive groups may include, for example, an alkyl group, a cycloalkyl groups, a halogenized alkyl group, a phenyl group, an alkyl phenyl group, etc., while the reactive functional group may include, for example, an amino group, an epoxy group, a vinyl group, a mercapto group, a halogen atom, a (meth)acryloyl group, etc.

Therefore, there may be mentioned as examples of so-called non-reactive silane coupling agent having non-reactive groups, methyltrimethoxysilane, dimethyldimethoxysilane, phenyltrimethoxysilane, diphenyldimethoxysilane, methyltriethoxysilane, dimethyldiethoxysilane, phenyltriethoxysilane, diphenyldiethoxysilane, isobutyltrimethoxysilane, butyltrimethoxysilane, hexyltrimethoxysilane, decyltrimethoxysilane, butyltriethoxysilane, isobutyltriethoxysilane, hexyltriethoxysilane, octyltriethoxysilane, decyltriethoxysilane, 3,3,3-trifluoropropyltrimethoxysilane, methyl-3,3,3-trifluoropropyldimethoxysilane, perfluorooctylethyltrimethoxysilane, perfluorooctylethyltriethoxysilane, peafluorooctylethyltriisopropoxysilane, trifluoropropyltrimethoxysilane, and dimethylmethoxyhydroxysilane.

In turn, there may be mentioned as examples of so-called reactive silane coupling agents having reactive functional groups, for example, N-2-(aminoethyl)-3-aminopropyltrimethoxysilane, vinyltrimethoxysilane, vinyltriethoxysilane, vinyltris(ß-methoxyethoxy)silane, ß-(3,4-epoxycyclohexyl)ethyltrimethoxysilane, γ-glycidoxymethyltrimethoxysilane, γ-glycidoxymethyltriethoxysilane, γ-glycidoxyethyltrimethoxysilane, γ-glycidoxyethyltriethoxysilane, γ-glycidoxypropyltrimethoxysilane, γ-glycidoxypropyltriethoxysilane, γ-(ß-glycidoxyethoxy)propyltrimethoxysilane, γ-(meth)acryloyloxymethyltrimethoxysilane, γ-(meth)acryloyloxymethyltriethoxysilane, γ-(meth)acryloyloxyethyltrimethoxysilane, γ-(meth)acryloyloxyethyltriethoxysilane, γ-(meth)acryloyloxypropyltrimethoxysilane, γ-(meth)acryloyloxypropyltriehoxy silane, γ-mercaptopropyltrimethoxysilane, and methyltrichlorosilane.

According to the invention, among the silane coupling agents above mentioned, such a reactive silane coupling agent that has reactive functional groups and such a non-reactive silane coupling agent that has a halogenized alkyl group, in particular, a fluoroalkyl group, are preferably used. In particular, vinyltrialkoxysilanes such as vinyltrimethoxysilane, vinyltriethoxysilane, and vinyltris-(ß-methoxyethoxy)silane; (meth)acryloyloxyalkyltrialkoxysilanes such as γ-(meth)acryloyloxy- methyltrimethoxysilane, γ-(meth)acryloyloxymethyltriethoxysilane, γ-(meth)acryloyloxyethyltrimethoxysilane, γ-(meth)acryloyloxyethyltriethoxysilane, γ-(meth)acryloyloxypropyltrimethoxysilane, γ-(met)acryloyloxypropyltriethoxysilane; and silane coupping agents having fluoroalkyl groups such as 3,3,3-trifluoropropyltrimethoxysilane, methyl-3,3,3-trifluoropropyldimethoxysilane, perfluorooctylethyltrimethoxysilane, perfluorooctylethyltriethoxysilane, perfluorooctylethyltriisopropoxysilane, and trifluoropropyltrimethoxysilane are preferably used.

According to the invention, in particular, when the alcohol dispersion of the microparticles of zirconia or titania is treated with a silane coupling agent in the presence of an acid at a temperature within a range from -20 to 25°C, the use of a vinyltrialkoxysilane, a (meth)acryloyloxyalkyltrialkoxysilane, or a silane coupling agent having a fluoroalkyl group is preferred because it provides a dispersion in an organic solvent which has a higher transparency than that of the starting dispersion used.

The silane coupling agent as mentioned above is used in an amount of 5 to 200 parts by weight per 100 parts by weight of zirconia or titania in the alcohol dispersion, preferably 5% by weight or more, particularly 10% by weight or more of zirconia or titania in the alcohol dispersion, and 150 parts by weight or less based on 100 parts by weight of zirconia or titania in the alcohol dispersion. When the silane coupling agent is used in an amount of more than 200 parts by weight based on the 100 parts by weight of zirconia or titania, the refractive index of the obtained dispersion of zirconia or titania in an organic solvent is remarkably decreased.

According to the invention, in particular, when zirconia is used as the microparticles of inorganic oxide, at least one silane coupling agent selected from a vinyltrialkoxysilane and a (meth)acryloyloxyalkyltrialkoxysilanes is preferably used. On the other hand, when titania is used as the microparticles of inorganic oxide, at least one silane coupling agent selected from a (meth)acryloyloxyalkyltrialkoxysilane and a silane coupling agent having a fluoroalkyl group is preferably used.

According to the invention, the alcohol dispersion of the microparticles of inorganic oxide is surface-treated with a silane coupling agent as described above, and then, in the second step, the alcohol, or the dispersion medium of the thus treated alcohol dispersion of the microparticles of inorganic oxide is replaced by a lipophilic organic solvent, thereby a desired dispersion of the microparticles of inorganic oxide in the organic solvent is obtained.

There may be mentioned as the lipophilic organic solvents as mentioned above, for example, ketones, esters, ethers, hydrocarbons, halogenized hydrocarbons, and carboxylic acid amides. Specifically, there may be mentioned ketones such as methyl ethyl ketone (MEK), diethyl ketone, methyl isobutyl ketone (MIBK), methyl amyl ketone, and cyclohexanone;. ethers such as ethyl acetate, butyl acetate, propylene glycol methyl ether acetate, diethylene glycol monoethyl ether acetate, methyl acrylate, and methyl methacrylate; ethers such as dibutyl ether and dioxane; hydrocarbons such as n-hexane, cyclohexane, toluene, xylene, and solvent naphtha; halogenized hydrocarbons such as carbon tetrachloride, dichloroethane, and chlorobenzene; and carboxylic acid amides such as dimethylformamide, dimethylacetamide, and N-methylpyrrolidone.

To replace the dispersion medium of the alcohol dispersion of the microparticles of inorganic oxide by a lipophilic organic solvent, well-known methods such as a method of replacement by distillation or a method of replacement by ultrafiltration concentration can be employed.

The method of replacement by distillation is a method in which the alcohol dispersion of the microparticles of inorganic oxide is heated to a temperature the same as or higher than the boiling temperature of the alcohol to distill away the alcohol, while a desired organic solvent is added to the dispersion. For example, the alcohol dispersion of microparticles of an inorganic oxide which has been surface-treated with a silane coupling agent is heated under an ordinary pressure or reduced pressure to distill away the alcohol, and an organic solvent is added to the dispersion at the same speed as the alcohol is distilled away, thereby the alcohol can be replaced by the organic solvent.

Accordingly, when the dispersion medium of the alcohol dispersion of the microparticles of inorganic oxide is replaced by an organic solvent by the method of replacement by distillation as described above, it is preferred that the organic solvent has a boiling temperature the same as or higher than that of the alcohol under the conditions the alcohol is distilled.

The method of replacement by ultrafiltration concentration is a method in which the alcohol dispersion of the microparticles of inorganic oxide is subjected to ultrafiltration concentration so that the alcohol is passed through a ultrafiltration membrane and removed from the dispersion while a desired organic solvent is added to the dispersion. For example, the alcohol dispersion of the microparticles of inorganic oxide which has been surface-treated with a silane coupling agent is fed under pressure to a ultrafiltration module to pass the alcohol through the membrane and remove the alcohol from the dispersion while a desired organic solvent is added to the dispersion intermittently or continuously, thereby the alcohol can be replaced by the organic solvent.

Although depending on the average particle size of the microparticles of inorganic oxide in the starting dispersion, according to the invention, the use of such an alcohol dispersion of the microparticles of inorganic oxide having an average particle size of 1 to 50 nm as described above makes it possible to provide a dispersion of the microparticles of inorganic oxide in an organic solvent usually having an average particle size of 1 to 120 nm, preferably 5 to 100 nm and a concentration of the microparticles of 1 to 40% by weight, preferably 5 to 30% by weight, with very little or reduced agglomeration of the microparticles of inorganic oxide. If necessary, such a dispersion of the microparticles of inorganic oxide that has an average particle size of about 3 to 30 nm in an organic solvent can also be obtained. In addition, the organic solvent can be further removed from the obtained dispersion of the microparticles of inorganic oxide in the organic solvent by distillation, if necessary, to increase the concentration of the microparticles of inorganic oxide in the dispersion.

### Example

The invention will be described in more detail with reference to Examples below, but the invention is not limited to those Examples.

### Example 1

13 g of acetic acid (available from Wako Pure Chemical Industries, Ltd., special grade chemical) was added to 100 g of a methanol dispersion of zirconia (SZR-M available from Sakai Chemical Industry Co., Ltd.; concentration of zirconia: 10% by weight; average particle size of zirconia: 3 nm; total light transmittance: 88.1%), and the resulting mixture was stirred at 50°C for one hour. 4 g of vinyltrimethoxysilane (KBM-1003 available from Shin-Etsu Chemical Co., Ltd.) was added to the resulting dispersion, and the resulting mixture was stirred at 50°C overnight.

The thus treated dispersion was heated under a normal pressure to distill away the methanol therefrom while methyl ethyl ketone (available from Wako Pure Chemical Industries, Ltd., special grade chemical) was added dropwise to the dispersion at the same speed as the methanol was distilled away to perform solvent replacement, thereby a dispersion of zirconia in methyl ethyl ketone was obtained.

### Example 2

13 g of acetic acid (available from Wako Pure Chemical Industries, Ltd., special grade chemical) was added to 100 g of a methanol dispersion of zirconia (SZR-M available from Sakai Chemical Industry Co., Ltd.), and the resulting mixture was stirred at 23°C for one hour. 4 g of vinyltrimethoxysilane (KBM-1003 available from Shin-Etsu Chemical Co., Ltd.) was added to the resulting dispersion, and the resulting mixture was stirred at 23°C over night.

The thus treated dispersion was subjected to ultrafiltration using a ceramic filter (available from Noritake Co., Ltd.) under pressure so that the methanol permeated through the ultrafiltration membrane and was removed therefrom while methyl ethyl ketone (available from Wako Pure Chemical Industries, Ltd., special grade chemical) was added dropwise to the dispersion at the same speed as the methanol permeated the membrane to perform solvent replacement, thereby a dispersion of zirconia in methyl ethyl ketone was obtained.

### Example 3

13 g of acetic acid (available from Wako Pure Chemical Industries, Ltd., special grade chemical) was added to 100 g of a methanol dispersion of zirconia (SZR-M available from Sakai Chemical Industry Co., Ltd.), and the resulting mixture was stirred at 50°C for one hour. 2 g of 3-acryloyloxypropyltrimethoxysilane (KBM-5103 available from Shin-Etsu Chemical Co., Ltd.) was added to the resulting dispersion, and the resulting mixture was stirred at 50°C overnight.

The thus treated dispersion was heated under a normal pressure to distill away the methanol therefrom while methyl ethyl ketone (available from Wako Pure Chemical Industries, Ltd., special grade chemical) was added dropwise to the dispersion at the same speed as the methanol was distilled away to perform solvent replacement, thereby a dispersion of zirconia in methyl ethyl ketone was obtained.

### Example 4

13 g of acetic acid (available from Wako Pure Chemical Industries, Ltd., special grade chemical) was added to 100 g of a methanol dispersion of zirconia (SZR-M available from Sakai Chemical Industry Co., Ltd.), and the resulting mixture was stirred at 23°C for one hour. 2 g of 3-methacryloyloxypropyltrimethoxysilane (KBM-503 available from Shin-Etsu Chemical Co., Ltd.) was added to the resulting dispersion, and the resulting mixture was stirred at 23°C overnight.

The thus treated dispersion was heated under a normal pressure to distill away the methanol therefrom while methyl ethyl ketone (available from Wako Pure Chemical Industries, Ltd., special grade chemical) was added dropwise to the dispersion at the same speed as the methanol was distilled away to perform solvent replacement, thereby a dispersion of zirconia in methyl ethyl ketone was obtained.

### Example 5

200 g of 1-butyl alcohol was added to 100 g of a methanol dispersion of zirconia (SZR-M available from Sakai Chemical Industry Co., Ltd.), and then the resulting mixture was concentrated using an evaporator to provide a 1-butyl alcohol dispersion of zirconia of which zirconia concentration was 10% by weight.

13 g of acetic acid (available from Wako Pure Chemical Industries, Ltd., special grade chemical) was added to 100 g of the dispersion, and the resulting mixture was stirred at 50°C for one hour. 12 g of vinyltrimethoxysilane (KBM-1003 available from Shin-Etsu Chemical Co., Ltd.) was added to the resulting dispersion, and the resulting mixture was stirred at 50°C overnight.

The thus treated dispersion was heated under a normal pressure to distill away the 1-butyl alcohol therefrom while toluene (available from Wako Pure Chemical Industries, Ltd., special grade chemical) was added dropwise to the dispersion at the same speed as the 1-butyl alcohol was distilled away to perform solvent replacement, thereby a dispersion of zirconia in toluene was obtained.

### Example 6

200 g of 1-butyl alcohol was added to 100 g of a methanol dispersion of zirconia (SZR-M available from Sakai Chemical Industry Co., Ltd.), and then the resulting mixture was concentrated using an evaporator to provide a 1-butyl alcohol dispersion of zirconia of which zirconia concentration was 10% by weight.

13 g of acetic acid (available from Wako Pure Chemical Industries, Ltd., special grade chemical) was added to 100 g of the dispersion, and the resulting mixture was stirred at 23°C for one hour. 12 g of vinyltrimethoxysilane (KBM-1003 available from Shin-Etsu Chemical Co., Ltd.) was added to the resulting dispersion, and the resulting mixture was stirred at 23°C overnight.

The thus treated dispersion was heated under a normal pressure to distill away the 1-butyl alcohol therefrom while toluene (available from Wako Pure Chemical Industries, Ltd., special grade chemical) was added dropwise to the dispersion at the same speed as the 1-butyl alcohol was distilled away to perform solvent replacement, thereby a dispersion of zirconia in toluene was obtained.

### Example 7

Methanol was distilled away from a methanol dispersion of zirconia (SZR-M available from Sakai Chemical Industry Co., Ltd.) to adjust the concentration of zirconia in the dispersion to 30% by weight.

39 g of acetic acid (available from Wako Pure Chemical Industries, Ltd., special grade chemical) was added to 100 g of the dispersion, and the resulting mixture was stirred at 10°C for one hour. 6 g of 3-methacryloyloxypropyltrimethoxy silane (KBM-503 available from Shin-Etsu Chemical Co., Ltd.) was added to the dispersion and stirred at 10°C overnight.

The dispersion was then heated under a normal pressure to distill away the methanol therefrom while methyl ethyl ketone (available from Wako Pure Chemical Industries, Ltd., special grade chemical) was added dropwise to the dispersion at the same speed as the methanol was distilled away to perform solvent replacement, thereby a dispersion of zirconia in methyl ethyl ketone was obtained.

### Example 8

13 g of acetic acid (available from Wako Pure Chemical Industries, Ltd., special grade chemical) was added to 100 g of a methanol dispersion of zirconia (SZR-M available from Sakai Chemical Industry Co., Ltd.), and the resulting mixture was stirred at -10°C for one hour. 2 g of 3-methacryloyloxypropyltrimethoxysilane (KBM-503 available from Shin-Etsu Chemical Co., Ltd.) was added to the dispersion and stirred at -10°C overnight.

The thus treated dispersion was heated under a normal pressure to distill away the methanol therefrom while methyl ethyl ketone (available from Wako Pure Chemical Industries, Ltd., special grade chemical) was added dropwise to the dispersion at the same speed as the methanol was distilled away to perform solvent replacement, thereby a dispersion of zirconia in methyl ethyl ketone was obtained.

### Example 9

50 mg of nitric acid having a concentration of 25% by weight was added to 100 g of a methanol dispersion of zirconia (SZR-M available from Sakai Chemical Industry Co., Ltd.), and the resulting mixture was stirred at 50°C for one hour. 2 g of 3-acryloyloxypropyltrimethoxysilane (KBM-5103 available from Shin-Etsu Chemical Co., Ltd.) was added to the dispersion and stirred at 50°C overnight.

The thus treated dispersion was heated under a normal pressure to distill away the methanol therefrom while methyl ethyl ketone (available from Wako Pure Chemical Industries, Ltd., special grade chemical) was added dropwise to the dispersion at the same speed as the methanol was distilled away to perform solvent replacement, thereby a dispersion of zirconia in methyl ethyl ketone was obtained.

### Example 10

6.5 g of acetic acid (available from Wako Pure Chemical Industries, Ltd., special grade chemical) was added to 100 g of a methanol dispersion of anatase titania (SAD-M available from Sakai Chemical Industry Co. Ltd.; concentration of titania: 5% by weight; average particle size of titania: 19nm; total light transmittance: 74.3%), and the resulting mixture was stirred at 50°C for one hour. 1 g of 3-methacryloyloxypropyltrimethoxysilane (KBM-503 available from Shin-Etsu Chemical Co., Ltd.) was added to the resulting dispersion, and the resulting mixture was stirred at 50°C overnight.

The thus treated dispersion was heated under a normal pressure to distill away the methanol therefrom while methyl ethyl ketone (available from Wako Pure Chemical Industries, Ltd., special grade chemical) was added dropwise to the dispersion at the same speed as the methanol was distilled away to perform solvent replacement, thereby a dispersion of titania in methyl ethyl ketone was obtained.

### Example 11

6.5 g of acetic acid (available from Wako Pure Chemical Industries, Ltd., special grade chemical) was added to 100 g of a methanol dispersion of anatase titania (SAD-M available from Sakai Chemical Industry Co., Ltd.) and the resulting mixture was stirred at 23°C for one hour. 1 g of trifluoropropyltrimethoxysilane (KBM-7103 available from Shin-Etsu Chemical Co., Ltd.) was added to the resulting dispersion, and the resulting mixture was stirred at 23°C overnight.

The thus treated dispersion was heated under a normal pressure to distill away the methanol therefrom while methyl ethyl ketone (available from Wako Pure Chemical Industries, Ltd., special grade chemical) was added dropwise to the dispersion at the same speed as the methanol was distilled away to perform solvent replacement, thereby a dispersion of titania in methyl ethyl ketone was obtained.

### Example 12

6.5 g of acetic acid (available from Wako Pure Chemical Industries, Ltd., special grade chemical) was added to 100 g of a methanol dispersion of anatase titania (SAD-M available from Sakai Chemical Industry Co., Ltd.) and the resulting mixture was stirred at 10°C for one hour. 1 g of 3-methacryloyloxypropyltrimethoxysilane (KBM-503 available from Shin-Etsu Chemical Co., Ltd.) was added to the dispersion and stirred at 10°C overnight.

The thus treated dispersion was heated under a normal pressure to distill away the methanol therefrom while methyl ethyl ketone (available from Wako Pure Chemical Industries, Ltd., special grade chemical) was added dropwise to the dispersion at the same speed as the methanol was distilled away to perform solvent replacement, thereby a dispersion of titania in methyl ethyl ketone was obtained.

### Example 13

6.5 g of acetic acid (available from Wako Pure Chemical Industries, Ltd., special grade chemical) was added to 100 g of a methanol dispersion of rutile titania (SRD-M available from Sakai Chemical Industry Co., Ltd.; concentration of titania: 5% by weight; average particle size of titania: 30 nm; total light transmittance: 46.0%) and the resulting mixture was stirred at 10°C for one hour. 1 g of trifluoropropyltrimethoxysilane (KBM-7103 available from Shin-Etsu Chemical Co., Ltd.) was added to the resulting dispersion, and the resulting mixture was stirred at 10°C overnight.

The thus treated dispersion was heated under a normal pressure to distill away the methanol therefrom while methyl ethyl ketone (available from Wako Pure Chemical Industries, Ltd., special grade chemical) was added dropwise to the dispersion at the same speed as the methanol was distilled away to perform solvent replacement, thereby a dispersion of titania in methyl ethyl ketone was obtained.

### Example 14

6.5 g of acetic acid (available from Wako Pure Chemical Industries, Ltd., special grade chemical) was added to 100 g of a methanol dispersion of rutile titania (SRD-M available from Sakai Chemical Industry Co., Ltd.) and the resulting mixture was stirred at -10°C for one hour. 1 g of trifluoropropyltrimethoxysilane (KBM-7103 available from Shin-Etsu Chemical Co., Ltd.) was added to the resulting dispersion, and the resulting mixture was stirred at -10°C overnight.

The thus treated dispersion was heated under a normal pressure to distill away the methanol therefrom while methyl ethyl ketone (available from Wako Pure Chemical Industries, Ltd., special grade chemical) was added dropwise to the dispersion at the same speed as the methanol was distilled away to perform solvent replacement, thereby a dispersion of titania in methyl ethyl ketone was obtained.

### Comparative Example 1

13 g of acetic acid (available from Wako Pure Chemical Industries, Ltd., special grade chemical) was added to 100 g of a methanol dispersion of zirconia (SZR-M available from Sakai Chemical Industry Co., Ltd.), and the resulting mixture was stirred at 23°C for one hour. 4 g of vinyltrimethoxysilane (KBM-1003 available from Shin-Etsu Chemical Co., Ltd.) was added to the resulting dispersion, and the resulting mixture was stirred at 65°C overnight.

The thus treated dispersion was heated under a normal pressure to distill away the methanol therefrom while methyl ethyl ketone (available from Wako Pure Chemical Industries, Ltd., special grade chemical) was added dropwise to the dispersion at the same speed as the methanol was distilled away to perform solvent replacement, thereby a dispersion of zirconia in methyl ethyl ketone was obtained.

### Comparative Example 2

200 g of 1-butyl alcohol was added to 100 g of a methanol dispersion of zirconia (SZR-M available from Sakai Chemical Industry Co., Ltd.), and then the resulting mixture was concentrated using an evaporator to provide 100 g of a 1-butyl alcohol dispersion of zirconia of which zirconia concentration was 10% by weight.

13 g of acetic acid (available from Wako Pure Chemical Industries, Ltd., special grade chemical) was added to 100 g of the dispersion, and the resulting mixture was stirred at 98°C for one hour. 12 g of vinyltrimethoxysilane (KBM-1003 available from Shin-Etsu Chemical Co., Ltd.) was added to the resulting dispersion, and the resulting mixture was stirred at 98°C overnight.

The thus treated dispersion was heated under a normal pressure to distill away the 1-butyl alcohol therefrom while toluene (available from Wako Pure Chemical Industries, Ltd., special grade chemical) was added dropwise to the dispersion at the same speed as the 1-butyl alcohol was distilled away to perform solvent replacement, thereby a dispersion of zirconia in toluene was obtained.

### Comparative Example 3

200 g of 1-butyl alcohol was added to 100 g of a methanol dispersion of zirconia (SZR-M available from Sakai Chemical Industry Co., Ltd.; concentration of zirconia: 10% by weight), and then the resulting mixture was concentrated using an evaporator to provide 100 g of a 1-butyl alcohol dispersion of zirconia of which zirconia concentration was 10% by weight.

13 g of acetic acid (available from Wako Pure Chemical Industries, Ltd., special grade chemical) was added to 100 g of the dispersion, and the resulting mixture was stirred at 117°C under reflux for one hour. 12 g of vinyltrimethoxysilane (KBM-1003 available from Shin-Etsu Chemical Co., Ltd.) was added to the resulting dispersion, and the resulting mixture was stirred at 117°C under reflux overnight.

The thus treated dispersion was heated under a normal pressure to distill away the 1-butyl alcohol therefrom while toluene (available from Wako Pure Chemical Industries, Ltd., special grade chemical) was added dropwise to the dispersion at the same speed as the 1-butyl alcohol was distilled away to perform solvent replacement.

However, it was found that while the solvent replacement was carried out, the dispersion of zirconia began to cloud, and when the solvent replacement was finished, precipitates were formed in the resulting dispersion in toluene; a homogeneous and transparent dispersion was not obtained.

### Comparative Example 4

6.5 g of acetic acid (available from Wako Pure Chemical Industries, Ltd., special grade chemical) was added to 100 g of a methanol dispersion of anatase titania (SAD-M available from Sakai Chemical Industry Co., Ltd.) and the resulting mixture was stirred at 65°C under reflux for one hour. 1 g of 3-methacryloyloxypropyltrimethoxysilane (KBM-503 available from Shin-Etsu Chemical Co., Ltd.) was added to the dispersion and stirred at 65°C overnight, whereupon the dispersion clouded.

The thus treated dispersion was heated under a normal pressure to distill away the methanol therefrom while methyl ethyl ketone (available from Wako Pure Chemical Industries, Ltd., special grade chemical) was added dropwise to the dispersion at the same speed as the methanol was distilled away to perform solvent replacement.

After having completed solvent replacement in this way, the mixture was found to separate into two phases: the particles of titania were completely sedimented while the upper portion was a transparent phase of methyl ethyl ketone. The upper portion was irradiated by laser beam, but the Tyndall phenomenon was not observed to show that particles of titania were absent in the upper portion.

### Comparative Example 5

6.5 g of acetic acid (available from Wako Pure Chemical Industries, Ltd., special grade chemical) was added to 100 g of a methanol dispersion of rutile titania (SRD-M available from Sakai Chemical Industry Co., Ltd.) and the resulting mixture was stirred at 65°C under reflux for one hour. 1 g of trifluoropropyltrimethoxysilane (KBM-7103 available from Shin-Etsu Chemical Co., Ltd.) was added to the resulting dispersion, and the resulting mixture was stirred at 65°C overnight, whereupon the dispersion clouded.

The thus treated dispersion was heated under a normal pressure to distill away methanol therefrom while methyl ethyl ketone (available from Wako Pure Chemical Industries, Ltd., special grade chemical) was added dropwise to the dispersion at the same speed as the methanol was distilled away to perform solvent replacement.

However, it was found that the resulting dispersion of titania in methyl ethyl ketone obtained by the solvent replacement in this way clouded, but also precipitates were found. Thus, a homogeneous and transparent dispersion was not obtained.

The average particle size of the organic dispersions of zirconia and the organic dispersions of titania used as starting materials in Examples and Comparative Examples described above was measured as follows. The total light transmittance and average particle size were measured for the dispersions of zirconia in organic solvents and the dispersions of titania in organic solvents obtained in Examples and Comparative Examples. The results are shown in Table 1 and Table 2. The total light transmittance and average particle size of the dispersion in organic solvents were measured as follows:

### Total Light Transmittance

The total light transmittance was measured by using a visible-ultraviolet spectrophotometer (V-750 manufactured by JASCO Corporation) with a cell having an optical path length of 10 mm in which a dispersion was filled.

### Average Particle Size

The average particle size of particles of inorganic oxide in a dispersion was measured in accordance with a dynamic light scattering by using a UPA-UT manufactured by Nikkiso Co., Ltd.

**Table 1**

| | | Examples | | | | | | | | | |
|---|---|---|---|---|---|---|---|---|---|---|---|
| | | 1 | 2 | 3 | 4 | 5 | 6 | 7 | 8 | 9 | 10 |
| Producing Conditions | | | | | | | | | | | |
| | Starting dispersion¹⁾ | ZrO₂ | ZrO₂ | ZrO₂ | ZrO₂ | ZrO₂ | ZrO₂ | ZrO₂ | ZrO₂ | ZrO₂ | TiO₂(A) |
| | Acid²⁾ | AA | AA | AA | AA | AA | AA | AA | AA | NA | AA |
| | Surface-treating temperature (°C) | 50 | 23 | 50 | 23 | 50 | 23 | 10 | -10 | 50 | 50 |
| | Organic dispersion medium²⁾ | MEK | MEK | MEK | MEK | T | T | MEK | MEK | MEK | MEK |
| | Silane coupling agent³⁾ | a | a | b | c | a | a | c | c | b | c |

| Properties of Product Dispersion | | | | | | | | | | | |
|---|---|---|---|---|---|---|---|---|---|---|---|
| | Total light transmittance (%) | 81.1 | 81.4 | 83.8 | 88.7 | 58.1 | 62.0 | 88.0 | 83.8 | 74.2 | 53.4 |
| | Average particle size (nm) | 31 | 30 | 11 | 10 | 65 | 63 | 7 | 7 | 29 | 100 |

| | | | | | | | | | | | |
|---|---|---|---|---|---|---|---|---|---|---|---|
| (Notes) 1) TiO₂(A) and TiO₂(R) stand for anatase titanium dioxide and rutile titanium dioxide, respectively. 2) AA, NA, MEK and T stand for acetic acid, nitric acid, methyl ethyl ketone and toluene, respectively. 3) a, b, c and d stand for vinyltrimethoxysilane, 3-acryloyloxypropyltrimethoxysilane, 3-methacryloyloxypropyltrimethoxysilane and trifluoropropyltrimethoxysilane, respectively (all available from Shin-Etsu Chemical Co., Ltd.). | | | | | | | | | | | |

**Table 2**

| | | Examples | | | | Comparative Examples | | | | |
|---|---|---|---|---|---|---|---|---|---|---|
| | | 11 | 12 | 13 | 14 | 1 | 2 | 3 | 4 | 5 |
| Producing Conditions | | | | | | | | | | |
| | Starting dispersion¹⁾ | TiO₂(A) | TiO₂(A) | TiO₂(R) | TiO₂(R) | ZrO₂ | ZrO₂ | ZrO₂ | TiO₂(A) | TiO₂(R) |
| | Acid²⁾ | AA | AA | AA | AA | AA | AA | AA | AA | AA |
| | Surface-treating temperature (°C) | 23 | 10 | 10 | -10 | 65 | 98 | 117 | 65 | 65 |
| | Organic dispersion medium²⁾ | MEK | MEK | MEK | MEK | MEK | T | T | MEK | MEK |
| | Silane coupling agent³⁾ | d | c | d | d | a | a | a | c | d |

| Properties of Product Dispersion | | | | | | | | | | |
|---|---|---|---|---|---|---|---|---|---|---|
| | Total light transmittance (%)⁴⁾ | 78.1 | 65.3 | 83.1 | 87.3 | 62.0 | 30.9 | P | S | P |
| | Average particle size (nm) | 23 | 60 | 15.5 | 15 | 65 | 189 | | | |

| | | | | | | | | | | |
|---|---|---|---|---|---|---|---|---|---|---|
| (Notes) 1) TiO₂(A) and TiO₂(R) stand for anatase titanium dioxide and rutile titanium dioxide, respectively. 2) AA, MEK and T stand for acetic acid, methyl ethyl ketone and toluene, respectively. 3) a, b, c and d stand for vinyltrimethoxysilane, 3-acryloyloxypropyltrimethoxysilane, 3-methacryloyloxypropyltrimethoxysilane and trifluoropropyltrimethoxysilane, respectively (all available from Shin-Etsu Chemical Co., Ltd.). 4) P stnads for occurrence of precipitates formation, and S stands for occurrence of two phase separation. | | | | | | | | | | |

In Comparative Example 1, a dispersion of zirconia in an organic solvent was obtained by treating a methanol dispersion of zirconia with a silane coupling agent in the presence of an acid at a temperature of 65°C, and then replacing the dispersion medium by methyl ethyl ketone. The dispersion had a total light transmittance of 62%.

On the other hand, dispersions of zirconia in an organic solvent were obtained in Examples 1 to 4 and Examples 7 to 9 by treating a methanol dispersion of zirconia with a silane coupling agent in the presence of an acid at the temperature within the range defined by the present invention, and then replacing the dispersion medium by methyl ethyl ketone. All the dispersions obtained had a total light transmittance of 74% or more, and in preferable cases, the total light transmittance was found to be close to that of the starting dispersion, such as more than 80%.

In particular, when a methanol dispersion of zirconia was treated with (meth)acryloyloxyalkyltrialkoxysilane in the presence of an acid at a temperature of 25°C or less, and then the dispersion medium was replaced by methyl ethyl ketone, a dispersion in an organic solvent having excellent transparency was obtained.

In preparation of a dispersion of zirconia in toluene starting from a methanol dispersion of zirconia, the starting dispersion was treated with a silane coupling agent at a temperature of 98°C and 117°C in Comparative Examples 2 and 3, respectively. A dispersion in toluene having low transparency was obtained in Comparative Example 2, and a heterogeneous dispersion was obtained in Comparative Example 3.

However, according to the invention, as shown in Examples 5 and 6, dispersions of zirconia in toluene were obtained which had transparency much higher than that of the dispersion obtained in Comparative Example 2.

On the other hand, as shown in Comparative Examples 4 and 5, when a methanol dispersion of titania was treated with a silane coupling agent in the presence of an acid at a temperature of 65°C, either precipitates were formed, resulting in failure to obtain a homogeneous and transparent dispersion in organic solvents, or two phase separation occurred, resulting in failure to obtain a dispersion.

In contrast, in Examples 10 to 14, a methanol dispersion of titania was treated with a silane coupling agent at a temperature prescribed according to the invention, and the dispersion medium of the resulting dispersion was replaced by methyl ethyl ketone, thereby a dispersion of titania in methyl ethyl ketone which was found to be homogeneous and transparent was obtained.

In particular, according to the invention, when a methanol dispersion of titania was treated with trifluoropropyltrimethoxysilane at a temperature of 25°C or less in the presence of an acid followed by solvent replacement by methyl ethyl ketone, there was obtained a dispersion of titania in an organic solvent which had a total light transmittances higher than that of the starting dispersion.

Specifically, as shown in Example 14, a methanol dispersion of rutile titania, the starting dispersion, had a total light transmittances of 46.0%. However, when the starting dispersion was treated with trifluoropropyltrimethoxysilane at 10°C, and the resulting dispersion was subjected to solvent replacement by methyl ethyl ketone, there was obtained a dispersion of rutile titania in an organic solvent which had a total light transmittance of 83%. Also as shown in Example 15, a starting dispersion was treated with trifluoropropyltrimethoxysilane at a temperature of -10°C, and the resulting dispersion was subjected to solvent replacement by methyl ethyl ketone, there was obtained a dispersion in an organic solvent which had a total light transmittance of 87%.

## Claims

1. A method for producing a dispersion of microparticles of an inorganic oxide in an organic solvent which comprises mixing an alcohol dispersion of microparticles of inorganic oxide selected from zirconia and titania with a silane coupling agent in the presence of an acid and stirring the resulting mixture to surface-treat the microparticles of the inorganic oxide at a temperature within a range from -20 to 60°C; and then replacing the alcohol by a lipophilic organic solvent.

2. The method according to claim 1 in which the acid is an organic acid or an inorganic acid.

3. The method according to claim 1 in which the silane coupling agent is at least one selected from a vinyltrialkoxysilane, a (meth)acryloyloxyalkyltrialkoxysilane and a silane coupling agent having a fluoroalkyl group.

4. The method according to claim 1 in which the microparticles of inorganic oxide are those of zirconia, and the silane coupling agent is at least one selected from a vinyltrialkoxysilane and a (meth)acryloyloxyalkyltrialkoxysilane.

5. The method according to claim 1 in which the microparticles of inorganic oxide are those of titania, and the silane coupling agent is at least one selected from a (meth)acryloyloxyalkyltrialkoxysilane and a silane coupling agent having a fluoroalkyl group.

6. The method according to claim 1 in which an alcohol dispersion of microparticles of an inorganic oxide selected from zirconia and titania is mixed with a silane coupling agent in the presence of an acid and the resulting mixture is stirred to surface-treat the microparticles of the inorganic oxide at a temperature within a range from -20 to 25°C; and then replacing the alcohol by a lipophilic organic solvent.

7. The method according to claim 1 or 6 in which the lipophilic organic solvent is methyl ethyl ketone or toluene.

8. The method according to claim 1 or 6 in which the alcohol in the alcohol dispersion is replaced by a lipophilic organic solvent by a method of replacement by distillation or by a method of replacement by ultrafiltration concentration.
